# EUROPEAN PATENT APPLICATION

(11) **EP 4 831 004 A1**
(43) Date of publication of application: **28.10.2026**
(21) Application number: 24906922.0
(22) Date of filing: 25.10.2024
(51) Int. Cl.: B60R 11/02, G01S 19/36, H01Q 1/22, H01Q 1/42

(54) **WORK VEHICLE**

(30) Priority: 19.12.2023 JP 2023213462
(71) Applicant: KUBOTA CORPORATION, Osaka-shi, Osaka 530-0011 (JP)
(72) Inventor: FUJIMOTO Kazutaka, Sakai-shi, Osaka 590-0908 (JP); TAKEOKA Susumu, Sakai-shi, Osaka 590-0908 (JP)
(74) Representative: Müller-Boré & Partner Patentanwälte PartG mbB
(86) International application number: PCT/JP2024/038071
(87) International publication number: WO 2025/134534

(57) **Abstract**

There is provided a working vehicle in which a GNSS receiver can be suitably disposed. A working vehicle includes a roof 200 that constitutes a ceiling portion of a cabin 100 and in which an internal space R capable of accommodating a device is formed; and a GNSS receiver 30 capable of receiving a GNSS signal and disposed in the internal space R.

## Description

### TECHNICAL FIELD

The present invention relates to a technique for a working vehicle.

### BACKGROUND ART

Conventionally, a technique for a working vehicle including a GNSS receiver capable of receiving signals (GNSS signals) from satellites has been known. For example, such a technique is disclosed in Patent Literature 1.

Patent Literature 1 discloses a tractor including an antenna unit (GNSS receiver) capable of detecting a position of a vehicle body by receiving radio wave signals from positioning satellites constituting a global navigation satellite system. The antenna unit is attached to the front of a roof of a cabin. The antenna unit is attached to the cabin through a support frame so as to be rotatable between a normal use position where the antenna unit protrudes upward beyond the roof of the cabin and a non-use position where the antenna unit is located lower than the roof.

Here, if the antenna unit is disposed at the front of the roof of the cabin as in the tractor disclosed in Patent Literature 1, there is a risk that the antenna unit or the support frame may obstruct the field of view, for example, when a driver in the cabin looks forward and upward. For this reason, it is desirable to suitably dispose the GNSS receiver from the viewpoint of ensuring the field of view of the driver.

### CITATION LIST

### PATENT LITERATURE

Patent Literature 1: JP 6640767 B2

### SUMMARY OF INVENTION

### TECHNICAL PROBLEM

One aspect of the present disclosure has been made in view of the circumstances described above, and an object thereof is to provide a working vehicle in which a GNSS receiver can be suitably disposed.

### SOLUTION TO PROBLEM

The object of one aspect of the present disclosure is as described above, and means for achieving the object will be described as follows.

A working vehicle according to one aspect of the present disclosure includes a roof that constitutes a ceiling portion of a cabin and in which an internal space capable of accommodating a device is formed; and a GNSS receiver capable of receiving a GNSS signal and disposed in the internal space.

According to one aspect of the present disclosure, the GNSS receiver can be suitably disposed.

The GNSS receiver according to one aspect of the present disclosure is disposed at a front portion of the roof.

According to one aspect of the present disclosure, the GNSS receiver can be disposed at a position suitable for position detection.

In the roof according to one aspect of the present disclosure, an opening portion that opens so as to communicate with the internal space is formed, and a cover portion capable of opening and closing the opening portion is provided.

According to one aspect of the present disclosure, the maintainability of the GNSS receiver can be improved.

The opening portion according to one aspect of the present disclosure is formed on an upper surface of the roof so as to have a shape that allows the GNSS receiver to pass through the opening portion.

According to one aspect of the present disclosure, maintenance of the GNSS receiver can be easily performed from the upper surface side of the roof.

The cabin according to one aspect of the present disclosure includes a cabin frame supporting the roof, and a support member fixed to the cabin frame and supporting the GNSS receiver in the internal space is provided.

According to one aspect of the present disclosure, the GNSS receiver can be suitably supported in the internal space of the roof.

The support member according to one aspect of the present disclosure includes a frame fixing portion fixed to the cabin frame, and a device fixing portion detachably fixed to the frame fixing portion and formed in a shape that allows the device fixing portion to pass through the opening portion, the GNSS receiver being fixed to the device fixing portion.

According to one aspect of the present disclosure, the workability of attaching and detaching the support member can be improved.

The cabin according to one aspect of the present disclosure includes a window frame portion fixed to the cabin frame and capable of supporting a window portion in a case where the window portion is provided in the roof, and the support member is fixed to the cabin frame through the window frame portion.

According to one aspect of the present disclosure, the GNSS receiver can be attached using the window frame portion.

The cover portion according to one aspect of the present disclosure includes
a main body portion covering the opening portion from above, and
a side wall portion extending downward from an outer peripheral portion of the main body portion,
a groove portion that opens upward and into which the side wall portion is inserted is formed in the roof around the opening portion, and
the groove portion is provided with a closing portion that closes a gap between the side wall portion and the groove portion.

According to one aspect of the present disclosure, entry of water through the gap between the cover portion and the opening portion can be suppressed.

### ADVANTAGEOUS EFFECTS OF INVENTION

According to one aspect of the present disclosure, the GNSS receiver can be suitably disposed.

### BRIEF DESCRIPTION OF DRAWINGS

Fig. 1 is a side view showing an overall configuration of a tractor according to one embodiment of the present disclosure.
Fig. 2 is an exploded perspective view showing a cabin frame, a roof, a support member, and a GNSS receiver of a tractor.
Fig. 3 is an exploded perspective view showing a cabin frame, an inner roof, a support member, and a GNSS receiver.
Fig. 4 is an exploded perspective view showing a support member.
Fig. 5 is an exploded perspective view showing an opening portion, a cover portion, and a closing portion of an outer roof.
Fig. 6 is a side cross-sectional view showing a roof.
Fig. 7 is a front cross-sectional view showing a roof.
Fig. 8 is an enlarged front cross-sectional view showing an opening portion, a groove portion, a cover portion, and a closing portion of an outer roof.

### DESCRIPTION OF EMBODIMENT

In the following description, directions indicated by arrows U, D, F, B, L, and R in the drawings are defined as an upward direction, a downward direction, a forward direction, a rearward direction, a leftward direction, and a rightward direction, respectively.

First, an overall configuration of a tractor 1 according to one embodiment of the present disclosure will be described.

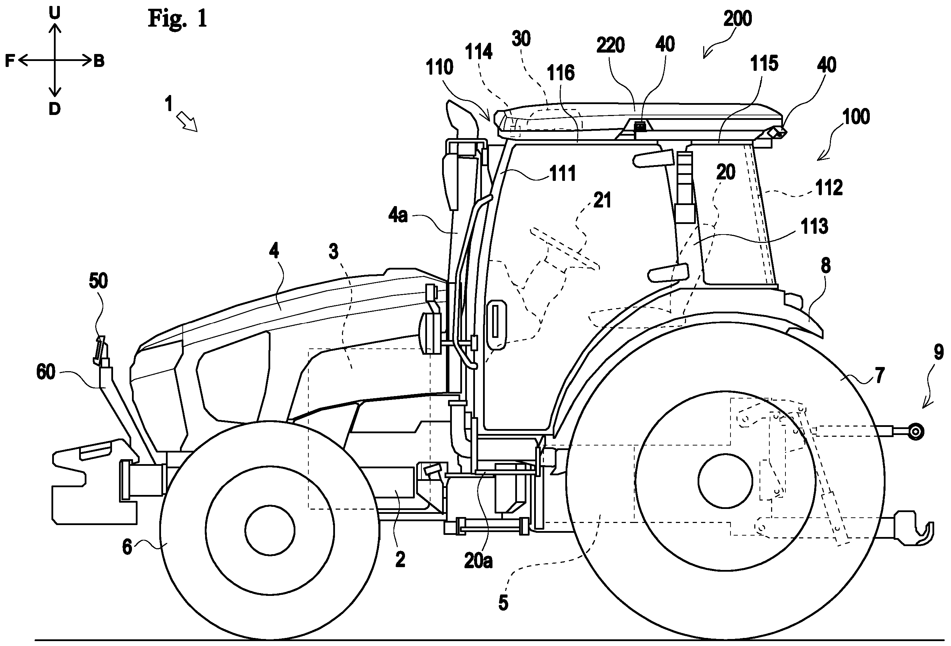

The tractor 1 shown in Fig. 1 mainly includes a vehicle body frame 2, an engine 3, a hood 4, a transmission case 5, front wheels 6, rear wheels 7, fenders 8, a lifting device 9, a seat 20, a steering wheel 21, a cabin 100, and the like.

The vehicle body frame 2 is a frame-shaped member formed by appropriately combining a plurality of panel members. The vehicle body frame 2 is formed in a substantially rectangular shape in plan view. The vehicle body frame 2 is disposed at a front portion of the tractor 1 with a longitudinal direction thereof oriented in a front-rear direction. The engine 3 is fixed to a rear portion of the vehicle body frame 2. The engine 3 is covered by a hood 4. The transmission case 5 is fixed to a rear portion of the engine 3. A muffler 4a for discharging exhaust gas from the engine 3 is disposed on the right side of the hood 4.

A front portion of the vehicle body frame 2 is supported by a pair of the left and right front wheels 6 through a front axle mechanism (not shown). A rear portion of the transmission case 5 is supported by a pair of the left and right rear wheels 7 through a rear axle mechanism (not shown). The pair of left and right rear wheels 7 are covered by the fenders 8 generally from above.

The lifting device 9 is provided at the rear portion of the transmission case 5. Various working implements (for example, a rotary tiller and the like) can be mounted to the lifting device 9. The lifting device 9 is capable of lifting and lowering the mounted working implement by means of an actuator such as a hydraulic cylinder. Power of the engine 3 can be transmitted to the working implement mounted to the lifting device 9 through a PTO shaft (not shown).

The power of the engine 3 is shifted by a transmission (not shown) accommodated in the transmission case 5, and then is transmittable to the front wheels 6 via the front axle mechanism and is transmittable to the rear wheels 7 via the rear axle mechanism. The front wheels 6 and the rear wheels 7 are rotationally driven by the power of the engine 3, thereby allowing the tractor 1 to travel. Further, the working implement mounted to the lifting device 9 can be driven by the power of the engine 3.

The cabin 100 is provided behind the engine 3. The cabin 100 is placed on a vehicle body (the transmission case 5 and the like). A driver space in which a driver gets is formed inside the cabin 100. As shown in Fig. 1, a seat 20 on which the driver is seated is disposed substantially at the center of the cabin 100. Further, the cabin 100 is provided with an auxiliary step 20a for getting on and off the seat 20. Further, the steering wheel 21 for adjusting a steering angle of the front wheels 6 is disposed at a front portion of the cabin 100.

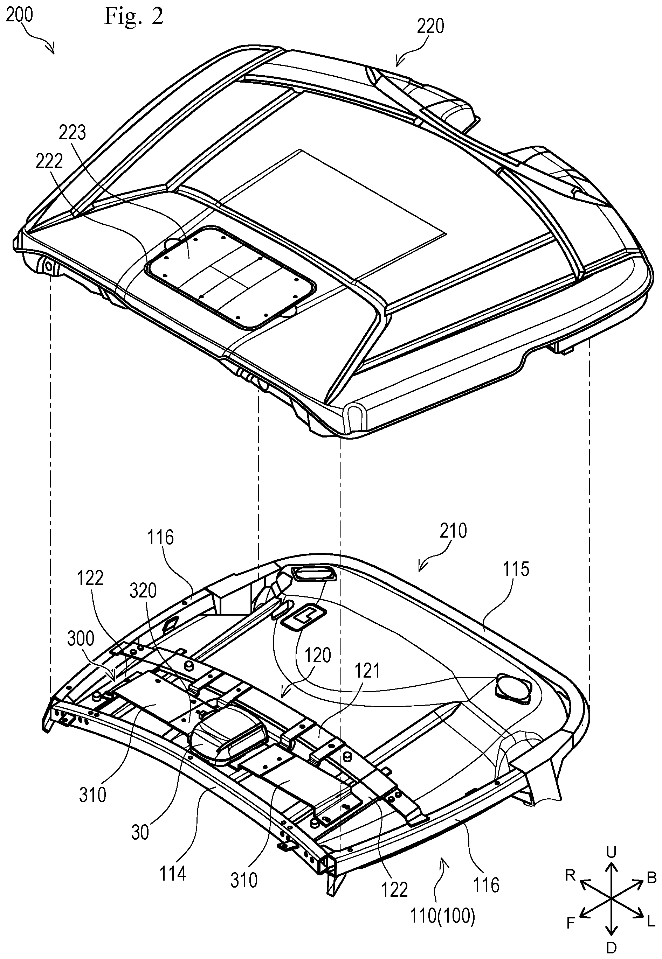

The cabin 100 is provided with a roof 200 constituting a ceiling (roof) portion. The roof 200 is formed in a substantially rectangular shape in plan view (see Fig. 2). Note that details of configurations of the cabin 100 and the roof 200 will be described later.

Further, the tractor 1 according to the present embodiment includes a GNSS receiver 30, a camera 40, and a radar unit 50.

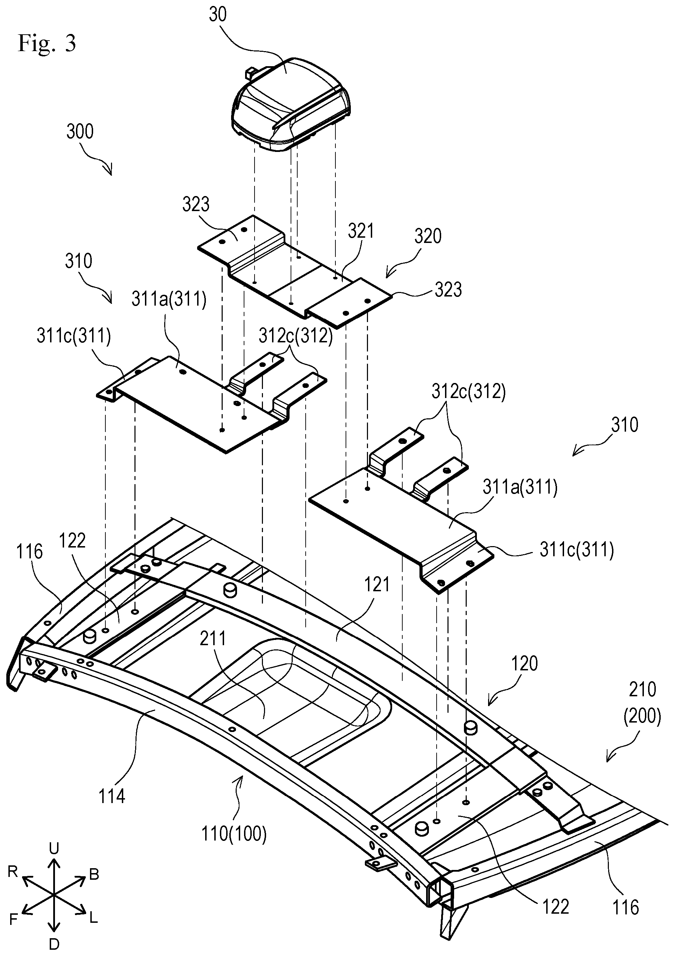

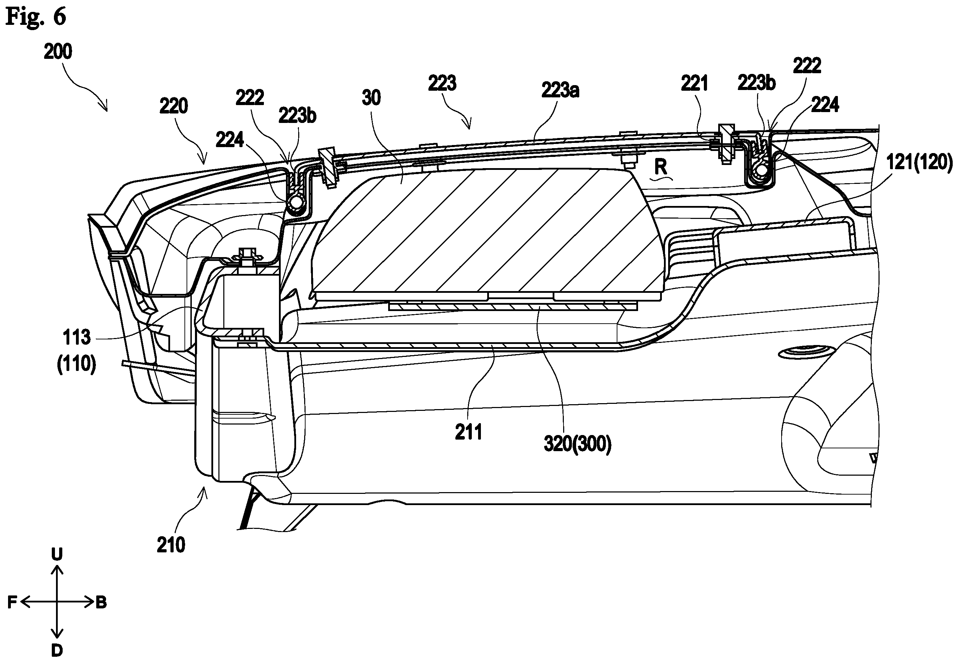

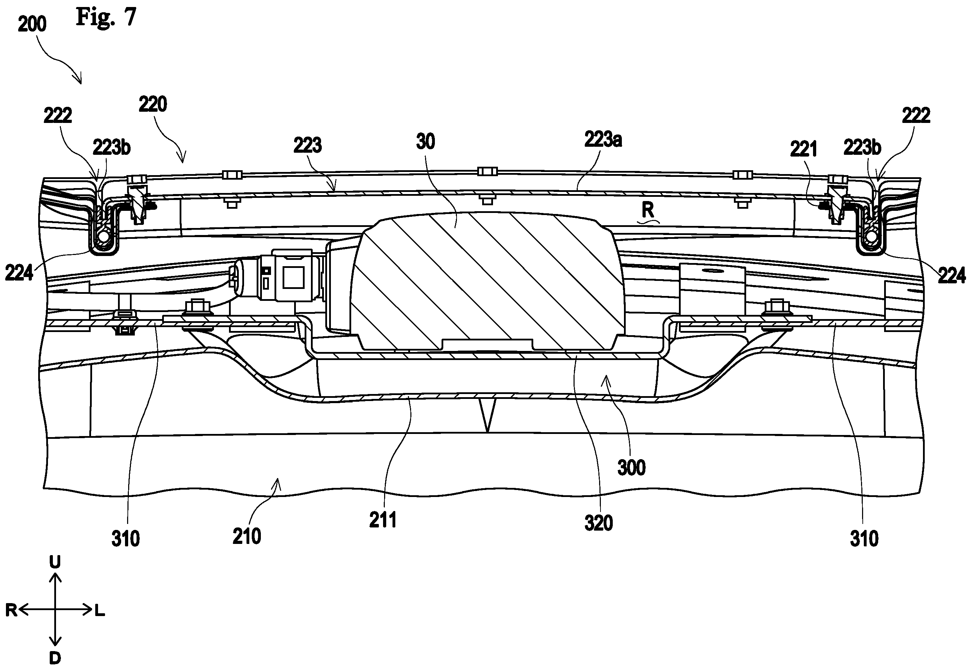

The GNSS receiver 30 shown in Figs. 2 and 3 is capable of receiving satellite signals (GNSS signals) transmitted from GNSS satellites. The GNSS receiver 30 is a part of a global navigation satellite system (GNSS) such as a GPS. The GNSS receiver 30 is formed in a substantially rectangular parallelepiped box shape. The GNSS receiver 30 is disposed in an internal space R of the roof 200 to be described later (see Figs. 6 and 7). Note that a detailed description of a disposition mode of the GNSS receiver 30 will be provided later.

The cameras 40 shown in Fig. 1 are capable of capturing images of the periphery of the vehicle body. The tractor 1 is capable of controlling operations of the vehicle body based on the images captured by the cameras 40. For example, an appearance of a person is learned based on the images captured by the cameras, and in a case where it is detected from an imaging result of each of the cameras that a person approaches the vicinity of the tractor 1, control can be performed to stop the tractor 1. Note that the use of each of the cameras is not limited thereto, and the captured image can be used for various uses. A plurality of the cameras 40 are disposed around the cabin 100. The plurality of cameras 40 are disposed at positions where images of regions in front of, on both left and right sides of, and behind the vehicle body can be captured. Note that, in Fig. 1, the camera 40 that captures an image of a region in front of the vehicle body is not shown.

The radar unit 50 shown in Fig. 1 is capable of detecting a detection target around the vehicle body using radio waves (for example, millimeter waves). Examples of the detection target include structures formed of metal or concrete, other vehicles, persons, and the like. The radar unit 50 is provided with a sensor (for example, a millimeter wave sensor) that emits radio waves and detects the detection target by receiving the radio waves reflected by the detection target. Fig. 1 shows an example in which the radar unit 50 is provided in front of the hood 4 of the tractor 1. The radar unit 50 is attached to the vehicle body (for example, the front portion of the vehicle body frame 2) of the tractor 1 by a radar support member 60. Note that the radar unit 50 is not limited to being provided at the front of the vehicle body (hood 4), and can be provided at any place such as both left and right side portions, a rear portion, or the like of the vehicle body.

The GNSS receiver 30, the cameras 40, and the radar unit 50 are communicatively connected through wiring to an appropriate control device capable of controlling traveling of the tractor 1. The control device is capable of detecting position information of the vehicle body based on GNSS signals received by the GNSS receiver 30. Further, the control device is capable of executing control to automatically drive the tractor 1 (automatic driving control) based on the position information, the images captured by the cameras 40, and the detection results of the radar unit 50. The automatic driving control includes, for example, control to automatically steer the vehicle body so as to travel straight in parallel with a set predetermined travel reference line, control to cause the vehicle body to automatically travel along a created target travel route, and control to automatically change speed or stop. For example, the control device can be disposed at various positions other than the internal space R in the vehicle body.

Hereinafter, the configuration of the cabin 100 will be described. The cabin 100 includes a cabin frame 110 that supports the roof 200. The cabin frame 110 shown in Figs. 1 and 2 includes front pillars 111, rear pillars 112, center pillars 113, a front beam 114, a rear beam 115, and side beams 116. Note that, in Fig. 2, each of the pillars is not shown.

The front pillars 111 shown in Fig. 1 support a front portion of the roof 200. The rear pillars 112 support a rear portion of the roof 200. The center pillars 113 support a substantially central portion (intermediate portion) of the roof 200 in the front-rear direction. The pillars (the front pillars 111, the rear pillars 112, and the center pillars 113) are provided so as to be located on both left and right sides of the cabin frame 110, respectively. Note that, in Fig. 1, only each of the pillars on the left side is shown.

The front beam 114 shown in Figs. 1 and 2 connects upper end portions of the left and right front pillars 111. A windshield is provided in a frame formed by the front beam 114 and the left and right front pillars 111. The rear beam 115 shown in Fig. 1 connects upper end portions of the left and right rear pillars 112 and upper end portions of the left and right center pillars 113. The side beams 116 connect the upper end portions of the front pillars 111 and the center pillars 113. As shown in Fig. 2, the side beams 116 are provided so as to be located on both left and right sides of the cabin frame 110, respectively.

Each of the pillars and each of the beams are formed in a hollow shape. Wiring connected to devices (for example, the GNSS receiver 30, the cameras 40, the radar unit 50, and the like) provided in the tractor 1 can be inserted through the internal spaces of each of the pillars and each of the beams.

The cabin frame 110 is provided with a window frame 120 shown in Figs. 2 and 3. The window frame 120 is capable of supporting a window portion (window glass constituting a sunroof) in a case where the window portion is provided in the roof 200. The window frame 120 is provided so as to be located at a front portion of the roof 200. The window frame 120 can be installed, for example, forward of the center of the roof 200 in the front-rear direction. Further, the window frame 120 can be installed, for example, forward of the seat 20. Note that, in the present embodiment, an example in which no window portion is provided in the roof 200 has been illustrated. The window frame 120 includes a first portion 121 and second portions 122.

The first portion 121 is capable of supporting a rear portion of the window portion. The first portion 121 is formed in a curved shape (arch shape) such that the upper side thereof is convex so as to correspond to the shape of the roof 200 (see Fig. 3). The first portion 121 is disposed behind the front beam 114 so as to connect the left and right side beams 116. Both end portions of the first portion 121 in a left-right direction are fixed to intermediate portions of the left and right side beams 116 in the front-rear direction (for example, substantially central portions in the front-rear direction), respectively.

The second portions 122 are capable of supporting both left and right sides of the window portion. The second portions 122 are disposed so as to be inclined downward toward the front such that the second portions 122 correspond to the shape of the roof 200 (see Fig. 3). The second portions 122 are disposed so as to connect the front beam 114 and the first portion 121. The second portions 122 are provided so as to be located on both left and right sides of the cabin frame 110, respectively. Both end portions of each of the second portions 122 in the front-rear direction are fixed to the front beam 114 and the first portion 121, respectively.

The window frame 120, together with the front beam 114, forms a frame capable of supporting the four peripheries of the window portion. Note that the front beam 114 is capable of supporting a front portion of the window portion. The frame formed by the window frame 120 and the front beam 114 forms a substantially rectangular opening elongated in the left-right direction in plan view. In a case where the window portion is provided in the tractor 1, the window portion is attached to the window frame 120 and the front beam 114 so as to cover the opening.

Hereinafter, the roof 200 will be described. The roof 200 is supported by the cabin frame 110. The roof 200 is formed of a material (for example, resin) that has little influence on communication of the GNSS receiver 30. The roof 200 includes an inner roof 210 and an outer roof 220.

The inner roof 210 shown in Figs. 2 and 3 constitutes the lower side of the roof 200 (the interior side of the cabin 100). The inner roof 210 is provided so as to cover a frame, which is formed by the respective beams (the front beam 114, the rear beam 115, and the side beams 116) of the cabin frame 110, from below (see Fig. 2).

As shown in Figs. 3, 6, and 7, a recess 211 recessed downward is formed in a front portion of the inner roof 210. The recess 211 is formed at a position corresponding to the disposition position of the GNSS receiver 30. Specifically, the recess 211 is formed at a substantially central portion in the left-right direction in the front portion of the inner roof 210. The recess 211 is formed so as to overlap the opening of the frame formed by the window frame 120 and the front beam 114 in plan view. The shape of the recess 211 in plan view is a shape corresponding to the shape (substantially rectangular shape) of the GNSS receiver 30 in plan view.

The outer roof 220 constitutes the upper side of the roof 200 (the exterior side of the cabin 100). The outer roof 220 is provided so as to cover the frame, which is formed by the respective beams (the front beam 114, the rear beam 115, and the side beams 116) of the cabin frame 110, and the inner roof 210 from above (see Fig. 2). As shown in Figs. 6 and 7, the internal space R is formed between the outer roof 220 and the inner roof 210. The GNSS receiver 30 is disposed in the internal space R. Further, for example, an air conditioner, an audio device or the like is disposed in the internal space R. The outer roof 220 includes an opening portion 221, a groove portion 222, a cover portion 223, and a closing portion 224.

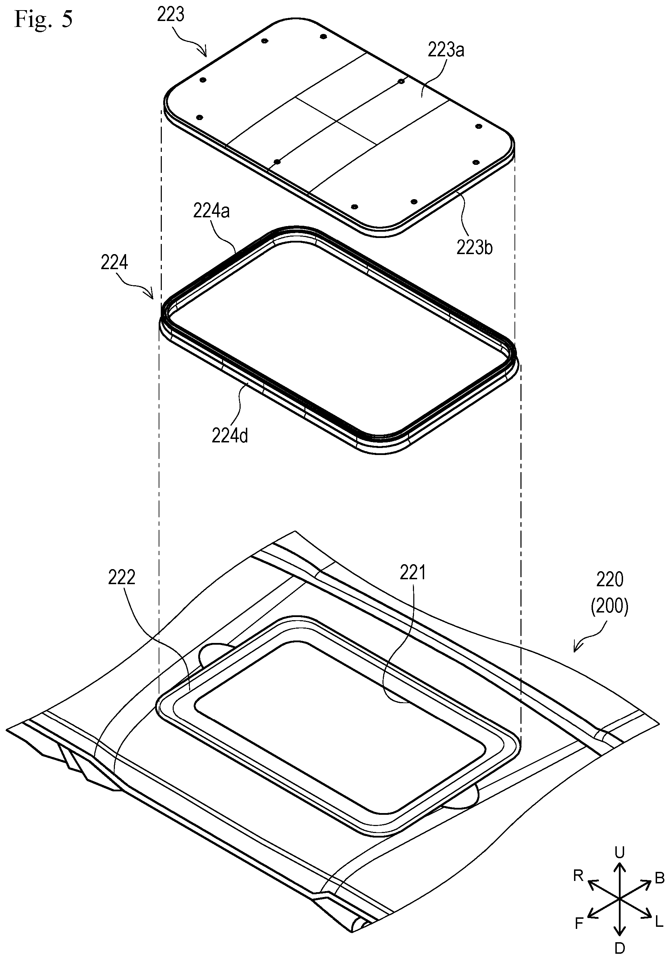

The opening portion 221 shown in Figs. 5 to 7 is an opening formed on the upper surface of the outer roof 220 so as to communicate with the internal space R. The opening portion 221 is formed at a substantially central portion in the left-right direction in a front portion of the outer roof 220. The opening portion 221 is formed so as to overlap the opening of the frame, which is formed by the window frame 120 and the front beam 114, and the recess 211 in plan view (see Figs. 6 and 7). The opening portion 221 is formed in a substantially rectangular shape elongated in the left-right direction. Further, the opening portion 221 is formed in a shape that allows the GNSS receiver 30 (a device fixing portion 320 to be described later) to pass therethrough.

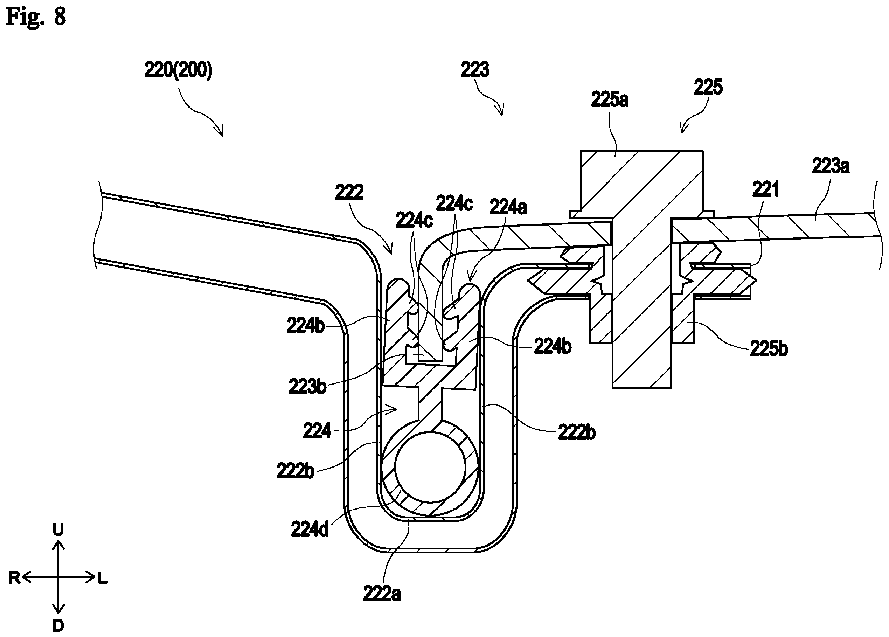

The groove portion 222 is a groove formed on the upper surface of the outer roof 220 so as to open upward. The groove portion 222 is formed so as to surround the periphery of the opening portion 221. As shown in Fig. 8, the groove portion 222 has a bottom 222a and a pair of side walls 222b rising from the bottom 222a.

The cover portion 223 shown in Fig. 5 is capable of opening and closing the opening portion 221. The cover portion 223 is formed in a substantially plate shape having plate surfaces oriented in an up-down direction. The cover portion 223 is formed in a shape corresponding to the groove portion 222 in plan view. The cover portion 223 is formed such that an outer peripheral portion thereof is bent downward (see Fig. 8). The cover portion 223 includes a main body portion 223a and a side wall portion 223b.

The main body portion 223a is a portion covering the opening portion 221 from above. The main body portion 223a is formed in a substantially plate shape having plate surfaces oriented in the up-down direction.

The side wall portion 223b is a portion extending downward from the outer peripheral portion of the main body portion 223a. As shown in Fig. 8, in a state where the opening portion 221 is closed by the cover portion 223, the side wall portion 223b is inserted into the groove portion 222.

The closing portion 224 shown in Figs. 5 and 8 closes a gap between the side wall portion 223b and the groove portion 222 in a state where the opening portion 221 is closed by the cover portion 223. The closing portion 224 is formed of a flexible material such as rubber. The closing portion 224 is formed in an annular shape corresponding to the shape of the groove portion 222 in plan view. The closing portion 224 is disposed over the entire groove portion 222. The closing portion 224 has substantially the same cross-sectional shape (the side cross-sectional shape shown in Fig. 8) over the entire length thereof. The closing portion 224 includes an upper portion 224a and a lower portion 224d.

The upper portion 224a constitutes an upper portion of the closing portion 224. The upper portion 224a is formed in a substantially U-shape that opens upward in cross-sectional view. A distal end portion of the side wall portion 223b is inserted into the opening of the upper portion 224a.

The upper portion 224a has a pair of wall portions 224b that face a surface on an inner side (opening portion 221 side) and a surface on an outer side (side opposite to the opening portion 221) of the side wall portion 223b inserted through the opening of the upper portion 224a, respectively. The wall portions 224b are provided with projection portions 224c, each protruding so as to be in contact with the side wall portion 223b. In the illustrated example, two projection portions 224c are formed on each of the wall portions 224b so as to be vertically spaced apart. The projection portions 224c are formed along the entire periphery of each of the wall portions 224b.

The lower portion 224d constitutes a lower portion of the closing portion 224. The lower portion 224d is formed in a substantially annular shape in cross-sectional view. The outer diameter of the lower portion 224d in cross-sectional view is formed to be larger than the groove width of the groove portion 222. Note that the outer diameter of the lower portion 224d may be formed to be equal to or smaller than the groove width of the groove portion 222.

As shown in Fig. 8, in a state where the closing portion 224 is disposed in the groove portion 222, the lower portion 224d is appropriately deformed in accordance with the shape of the groove portion 222. In this state, the lower portion 224d is in contact with each of the bottom 222a and the side walls 222b of the groove portion 222. Accordingly, a gap between the lower portion 224d and the groove portion 222 is closed. Further, in a state where the opening portion 221 is closed by the cover portion 223, the side wall portion 223b of the cover portion 223 is inserted into the opening of the upper portion 224a of the closing portion 224, and each of the projection portions 224c is in contact with the side wall portion 223b. In this state, a gap between the opening of the upper portion 224a and the side wall portion 223b is closed.

In the present embodiment, the closing portion 224 as described above closes the gap between the side wall portion 223b of the cover portion 223 and the groove portion 222, thereby being capable of suppressing entry of water through the gap. Accordingly, the splashing of water onto the GNSS receiver 30 inside the roof 200 can be suppressed.

Further, as shown in Fig. 8, the cover portion 223 is fixed to a portion of the outer roof 220 surrounding the opening portion 221 by fastening the cover portion 223 with fasteners 225 in a state where the opening portion 221 is closed by the cover portion 223. In the present embodiment, the fasteners 225, each including a bolt 225a and a nut 225b, are used. The fasteners 225 can be formed of a material (for example, resin) that has little influence on communication of the GNSS receiver 30. The cover portion 223 can be removed by releasing the fastening of the fasteners 225 (the bolts 225a and the nuts 225b). In this manner, the cover portion 223 is detachably provided on the upper surface of the outer roof 220.

Next, a support member 300 will be described. The support member 300 shown in Figs. 2 to 4 is fixed to the cabin frame 110 and supports the GNSS receiver 30 in the internal space R. In the present embodiment, the support member 300 is fixed to the cabin frame 110 through the window frame 120. The support member 300 includes frame fixing portions 310 and the device fixing portion 320.

The frame fixing portions 310 are fixed to the window frame 120. The frame fixing portions 310 are provided on both left and right sides of the window frame 120, respectively. Since the left and right frame fixing portions 310 are configured to be laterally symmetrical, the following description focuses on the frame fixing portion 310 provided on the left side, and the description of the frame fixing portion 310 on the right side is omitted as appropriate. Each of the frame fixing portions 310 includes a main body portion 311 and a rear fixing portion 312.

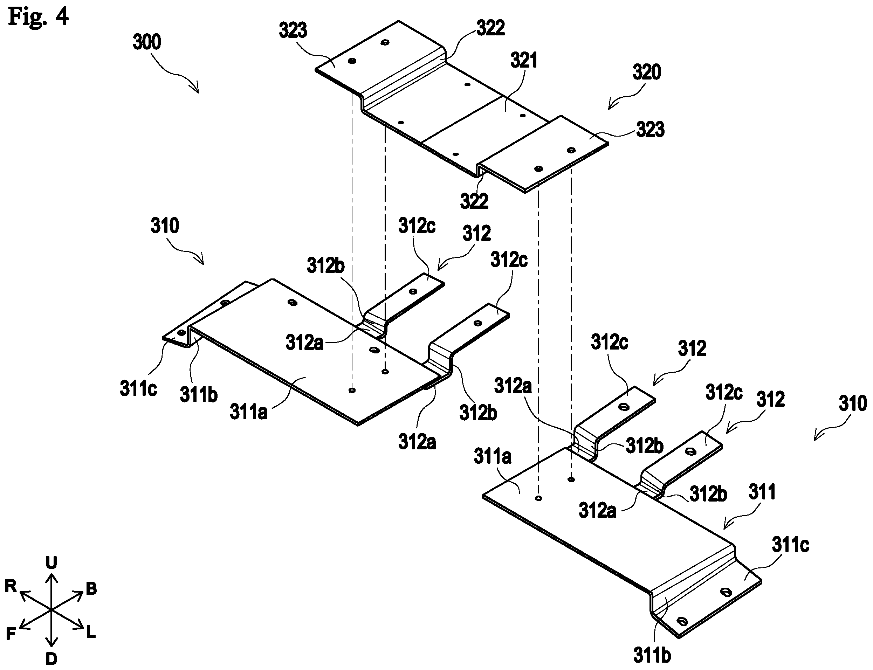

The main body portion 311 shown in Fig. 4 is a main structural body of the frame fixing portion 310. The main body portion 311 has a plate portion 311a formed in a substantially plate shape having plate surfaces oriented in the up-down direction. The plate portion 311a is disposed such that the plate surfaces are generally horizontal. The main body portion 311 is provided with an extending portion 311b extending downward from a left end portion of the plate portion 311a. Further, the main body portion 311 is provided with a fixing piece portion 311c extending leftward from a lower end portion of the extending portion 311b. The fixing piece portion 311c is fixed to the upper surface of the second portion 122 on the left side of the window frame 120 (see Fig. 3). The fixing piece portion 311c is formed in a plate shape having a plate surface generally parallel to the upper surface of the second portion 122. That is, the fixing piece portion 311c is formed so as to be inclined downward toward the front.

The rear fixing portion 312 is fixed to the first portion 121 of the window frame 120. The rear fixing portion 312 has a first fixing piece portion 312a fixed to the lower surface of the plate portion 311a of the main body portion 311. The rear fixing portion 312 is provided with an extending portion 312b extending upward from a rear end portion of the first fixing piece portion 312a. Further, the rear fixing portion 312 is provided with a second fixing piece portion 312c extending rearward from an upper end portion of the extending portion 312b. The second fixing piece portion 312c is fixed to the upper surface of the first portion 121 (see Fig. 3).

Two rear fixing portions 312 are provided for one main body portion 311. The rear fixing portions 312 are disposed so as to be spaced apart in the left-right direction. The height position of the second fixing piece portion 312c of each of the rear fixing portions 312 is set according to the height of the upper surface of the first portion 121 (arch shape) to which each of the second fixing piece portions 312c is fixed. Specifically, of the rear fixing portions 312, the rear fixing portion 312 fixed to the center side of the first portion 121 in the left-right direction is disposed higher than the rear fixing portion 312 fixed to the left side of the first portion 121. Further, the vertical dimension of the extending portion 312b of each of the rear fixing portions 312 is set according to the height position of the corresponding second fixing piece portion 312c.

The frame fixing portion 310 on the left side has been described above. The frame fixing portion 310 on the right side is formed to be laterally symmetrical to the frame fixing portion 310 on the left side, and is attached to the right side of the window frame 120.

The device fixing portion 320 is detachably fixed to the left and right frame fixing portions 310, and the GNSS receiver 30 is fixed to the device fixing portion 320. The device fixing portion 320 is formed in a substantially rectangular shape in plan view. The device fixing portion 320 is formed in a shape that allows the device fixing portion 320 to pass through the opening portion 221 of the outer roof 220. In the present embodiment, the shape of the device fixing portion 320 in plan view is formed to be smaller than the shape of the opening portion 221 in plan view. The device fixing portion 320 includes a device fixing portion 321, extending portions 322, and frame-side fixing portions 323.

The device fixing portion 321 is a portion to which the GNSS receiver 30 is fixed. The device fixing portion 321 is formed in a substantially plate shape having plate surfaces oriented in the up-down direction. Further, the device fixing portion 321 is disposed such that the plate surfaces are generally horizontal. The GNSS receiver 30 is fixed to the upper surface of the device fixing portion 321 by appropriate fasteners.

The extending portions 322 are portions extending upward from both end portions of the device fixing portion 321 in the left-right direction, respectively.

The frame-side fixing portions 323 are portions detachably fixed to the left and right frame fixing portions 310. The frame-side fixing portions 323 extend outward in the left-right direction (toward sides opposite to the center) from upper end portions of the left and right extending portions 322. The frame-side fixing portions 323 are formed in a plate shape having plate surfaces generally parallel to the plate portions 311a of the frame fixing portions 310. The frame-side fixing portions 323 are detachably fixed to the upper surfaces of the plate portions 311a of the left and right frame fixing portions 310 using fasteners such as bolts and nuts, respectively.

The configuration of the tractor 1 according to the present embodiment has been described above. In a state where the GNSS receiver 30 is attached to the window frame 120 (cabin frame 110) through the support member 300, the GNSS receiver 30 is accommodated in the internal space R of the roof 200 (see Figs. 6 and 7). In this state, as shown in Figs. 2 and 6, the GNSS receiver 30 is disposed at a front portion of the roof 200. Further, as shown in Figs. 2 and 7, the GNSS receiver 30 is disposed at the center of the roof 200 in the left-right direction. In the present embodiment, by using the support member 300, the GNSS receiver 30 can be attached using the window frame 120. Further, in the present embodiment, the GNSS receiver 30 can be disposed generally horizontally by forming the support member 300 in the shape described above.

In the tractor 1 according to the present embodiment, the GNSS receiver 30 can be attached and detached when maintenance or the like of the GNSS receiver 30 is performed. Hereinafter, a method for attaching and detaching the GNSS receiver 30 will be described.

First, a method for taking out the GNSS receiver 30 accommodated in the internal space R will be described. When performing the work of taking out the GNSS receiver 30, a worker unfastens the fasteners used to fix the cover portion 223 to the outer roof 220, and removes the cover portion 223 from the upper surface of the outer roof 220 (see Fig. 5). In this state, the GNSS receiver 30 is exposed through the opening portion 221 of the outer roof 220.

Next, the worker unfastens the fasteners used to fix the device fixing portion 320 to the frame fixing portions 310 of the support member 300, and removes the device fixing portion 320 from the frame fixing portions 310 (see Fig. 4). In this state, the GNSS receiver 30 can be taken out of the internal space R by moving the device fixing portion 320, on which the GNSS receiver 30 is provided, upward to pass through the opening portion 221.

Next, a method for attaching the GNSS receiver 30 will be described. When performing the work of attaching the GNSS receiver 30, in reverse order of the work of taking out the GNSS receiver 30, the worker passes the device fixing portion 320, on which the GNSS receiver 30 is provided, through the opening portion 221 and moves the device fixing portion 320 downward. Next, the worker fixes the device fixing portion 320 to the frame fixing portions 310 using fasteners.

Next, the worker attaches the cover portion 223 so as to close the opening portion 221 of the outer roof 220, and fixes the cover portion 223 to the outer roof 220 using fasteners. Accordingly, the work of attaching the GNSS receiver 30 is completed. According to the above-described configuration, the GNSS receiver 30 can be easily attached and detached while the GNSS receiver 30 can be accommodated inside the roof 200, and the maintainability of the GNSS receiver 30 can be improved.

Further, the tractor 1 may be shipped (sold) with the GNSS receiver 30 not provided. According to the present embodiment, the GNSS receiver 30 can also be retrofitted to the vehicle body of the tractor 1 in which the GNSS receiver 30 is not provided. Hereinafter, a method for retrofitting the GNSS receiver 30 will be described. Note that, in the tractor 1 described below, it is assumed that the support member 300 is provided in the internal space R even in a case where the GNSS receiver 30 is not provided.

In a case where the worker installs the GNSS receiver 30 as a retrofit, the worker detaches the cover portion 223 from the outer roof 220, and detaches the device fixing portion 320 from the frame fixing portions 310 of the support member 300 (see Figs. 4 and 5). Next, the worker passes the device fixing portion 320 through the opening portion 221 to take the device fixing portion 320 out of the internal space R.

Next, the worker attaches the GNSS receiver 30 to the device fixing portion 320, and attaches the device fixing portion 320, on which the GNSS receiver 30 is provided, to the frame fixing portions 310. Next, the worker attaches the cover portion 223 to the outer roof 220. Accordingly, the work of installing the GNSS receiver 30 as a retrofit is completed. According to the above-described configuration, the work of installing the GNSS receiver 30 as a retrofit can be easily performed while the GNSS receiver 30 can be accommodated inside the roof 200. Note that at least a part of the support member 300 (for example, the device fixing portion 320) may be installed as a retrofit, together with the GNSS receiver 30.

As described above, the tractor 1 (working vehicle) according to the present embodiment includes
the roof 200 that constitutes the ceiling portion of the cabin 100 and in which the internal space R capable of accommodating a device is formed; and
the GNSS receiver 30 capable of receiving a GNSS signal and disposed in the internal space R.

With this configuration, the GNSS receiver 30 can be suitably accommodated. That is, since the GNSS receiver 30 is disposed in the internal space R of the roof 200, unlike a case where the GNSS receiver 30 is provided outside the cabin 100, obstruction of the field of view by the GNSS receiver 30 when the driver in the cabin 100 looks forward and upward can be suppressed. Further, the external appearance of the working vehicle can be improved. Further, unlike a case where the GNSS receiver 30 is provided on an upper portion of the roof 200, it is not necessary to change the height position of the GNSS receiver 30 when the tractor 1 is stored, so that workability can be improved.

Further, the GNSS receiver 30 is disposed at the front portion of the roof 200.

With this configuration, the GNSS receiver 30 can be disposed at a position suitable for position detection. That is, in conventional tractors, the GNSS receiver 30 is typically disposed in front of the cabin 100 (outside the cabin 100 and at the front portion of the roof 200). According to the configuration of the present embodiment, since the GNSS receiver 30 in the roof 200 is disposed at the front portion of the roof 200, position detection can be performed at a position close to the position where the conventional GNSS receiver 30 is disposed (a position where the front-rear position is not significantly changed).

Further, in the roof 200, the opening portion 221 that opens so as to communicate with the internal space R is formed, and
the cover portion 223 capable of opening and closing the opening portion 221 is provided.

With this configuration, maintenance of the GNSS receiver 30 can be performed through the opening portion 221, so that the maintainability of the GNSS receiver 30 can be improved.

Further, the opening portion 221 is formed on the upper surface of the roof 200 so as to have a shape that allows the GNSS receiver 30 to pass through the opening portion 221.

With this configuration, maintenance of the GNSS receiver 30 can be easily performed from the upper surface side of the roof 200. Further, the GNSS receiver 30 can be attached and detached through the opening portion 221.

Further, the cabin 100 includes the cabin frame 110 supporting the roof 200, and
the support member 300 fixed to the cabin frame 110 and supporting the GNSS receiver 30 in the internal space R is provided.

With this configuration, the GNSS receiver 30 can be suitably supported in the internal space R of the roof 200.

Further, the support member 300 includes
the frame fixing portion 310 fixed to the cabin frame 110, and
the device fixing portion 320 detachably fixed to the frame fixing portion 310 and formed in a shape that allows the device fixing portion 320 to pass through the opening portion 221, the GNSS receiver 30 being fixed to the device fixing portion 320.

With this configuration, the workability of attaching and detaching the support member 300 can be improved. Further, the GNSS receiver 30 can be attached and detached in such a way to pass the device fixing portion 320, to which the GNSS receiver 30 is fixed, through the opening portion 221.

Further, the cabin 100 includes the window frame 120 (window frame portion) fixed to the cabin frame 110 and capable of supporting a window portion in a case where the window portion is provided in the roof 200, and
the support member 300 is fixed to the cabin frame 110 through the window frame 120.

With this configuration, the GNSS receiver 30 can be attached using the window frame 120.

Further, the cover portion 223 includes
the main body portion 223a covering the opening portion 221 from above, and
the side wall portion 223b extending downward from the outer peripheral portion of the main body portion 223a, the groove portion 222 that opens upward and into which the side wall portion 223b is inserted is formed
in the roof 200 around the opening portion 221, and
the groove portion 222 is provided with the closing portion 224 that closes the gap between the side wall portion 223b and the groove portion 222.

With this configuration, entry of water through the gap between the cover portion 223 and the opening portion 221 can be suppressed. Accordingly, the splashing of water onto the GNSS receiver 30 inside the roof 200 can be suppressed.

Note that the tractor 1 according to the present embodiment is one embodiment of the working vehicle according to the present invention.

Further, the window frame 120 according to the present embodiment is one embodiment of the window frame portion according to the present invention.

One embodiment of the present invention has been described above; however, the present invention is not limited to the above-described configuration, and can be modified in various forms within the scope of the invention described in the claims.

For example, in the present embodiment, an example in which the support member 300 is fixed to the cabin frame 110 using the window frame 120 has been illustrated; however, the present invention is not limited thereto. For example, the support member 300 can be fixed to the cabin frame 110 directly or through another member without using the window frame 120.

Further, in the present embodiment, an example in which the GNSS receiver 30 is disposed at the front portion of the roof 200 (a position where the window portion can be installed) has been illustrated; however, the present invention is not limited thereto. For example, in a case where it is difficult to install the GNSS receiver 30 at the front portion of the roof 200, such as a case where a window portion is disposed in the roof 200, the GNSS receiver 30 may be disposed at a position other than the front portion (for example, the rear side or the center side in the front-rear direction). Further, in the present embodiment, an example in which the GNSS receiver 30 is disposed at the center of the roof 200 in the left-right direction has been illustrated; however, the present invention is not limited thereto. For example, the GNSS receiver 30 can also be disposed on the right side or the left side of the roof 200. As described above, the GNSS receiver 30 can be disposed at various positions in the roof 200.

Further, in the present embodiment, an example in which the opening portion 221 is provided on the upper surface of the roof 200 (outer roof 220) has been illustrated; however, the present invention is not limited thereto. For example, the opening portion may be provided on the lower surface of the roof 200 (inner roof 210). In this case, maintenance of the GNSS receiver 30 can be performed from the interior of the cabin 100. Further, in this case, the closing portion 224 may not be provided.

Further, in the present embodiment, an example in which the cover portion 223 constitutes a part of the roof 200 (outer roof 220) has been illustrated; however, the present invention is not limited thereto. For example, the cover portion 223 may be formed as a member separate from the roof 200. In this case, for example, it is possible to employ a configuration in which the cover portion 223 is formed integrally with the GNSS receiver 30, and the cover portion 223 closes the opening portion 221 in a state where the GNSS receiver 30 is attached to the roof 200.

Further, in the present embodiment, an example in which the cabin 100 employs a configuration including the front pillars 111, the rear pillars 112, and the center pillars 113 (six-pillar type) has been illustrated; however, the present invention is not limited thereto. The cabin 100 can employ, for example, various configurations such as a configuration not including the center pillars 113 (four-pillar type).

Further, in the present embodiment, an example in which the control device is disposed at a position other than the internal space R (outside the roof 200) has been illustrated; however, the present invention is not limited thereto. For example, the control device may be disposed in the internal space R, together with the GNSS receiver 30.

In addition, the shapes, structures, and the like of the respective portions illustrated in the present embodiment are merely examples, and the configuration of each portion can be arbitrarily modified.

Further, in the above-described embodiment, the tractor 1 has been illustrated as the working vehicle; however, the present invention is not limited to such an embodiment. For example, the working vehicle may be any other agricultural vehicle, construction vehicle, industrial vehicle, or the like.

### INDUSTRIAL APPLICABILITY

The present invention can be applied to a working vehicle.

### REFERENCE SIGNS LIST

1: Tractor
30: GNSS receiver
100: Cabin
200: Roof
300: Support member

## Claims

1. A working vehicle comprising:
a roof that constitutes a ceiling portion of a cabin and in which an internal space capable of accommodating a device is formed; and
a GNSS receiver capable of receiving a GNSS signal and disposed in the internal space.

2. The working vehicle according to claim 1, wherein
the GNSS receiver is disposed at a front portion of the roof.

3. The working vehicle according to claim 1, wherein
in the roof, an opening portion that opens so as to communicate with the internal space is formed, and
a cover portion capable of opening and closing the opening portion is provided.

4. The working vehicle according to claim 3, wherein
the opening portion is formed on an upper surface of the roof so as to have a shape that allows the GNSS receiver to pass through the opening portion.

5. The working vehicle according to claim 3, wherein
the cabin includes a cabin frame supporting the roof, and
a support member fixed to the cabin frame and supporting the GNSS receiver in the internal space is provided.

6. The working vehicle according to claim 5, wherein
the support member includes
a frame fixing portion fixed to the cabin frame, and
a device fixing portion detachably fixed to the frame fixing portion and formed in a shape that allows the device fixing portion to pass through the opening portion, the GNSS receiver being fixed to the device fixing portion.

7. The working vehicle according to claim 5, wherein
the cabin includes a window frame portion fixed to the cabin frame and capable of supporting a window portion in a case where the window portion is provided in the roof, and
the support member is fixed to the cabin frame through the window frame portion.

8. The working vehicle according to claim 4, wherein
the cover portion includes
a main body portion covering the opening portion from above, and
a side wall portion extending downward from an outer peripheral portion of the main body portion,
a groove portion that opens upward and into which the side wall portion is inserted is formed in the roof around the opening portion, and
the groove portion is provided with a closing portion that closes a gap between the side wall portion and the groove portion.
